**Europäisches Patentamt**

**European Patent Office**

**Office européen des brevets**

(11) Veröffentlichungsnummer: **0 088 806**
**A1**

## (12) EUROPÄISCHE PATENTANMELDUNG

(21) Anmeldenummer: 82101172.3

(22) Anmeldetag: 17.03.82

(51) Int. Cl.³: **B 64 B 1/40**

(43) Veröffentlichungstag der Anmeldung:
21.09.83 Patentblatt 83/38

(84) Benannte Vertragsstaaten:
AT BE CH DE FR GB IT LI LU NL SE

(71) Anmelder: **Schmitz, Hans-Werner**
**Grillostrasse 100a**
**D-4650 Gelsenkirchen-Schalke(DE)**

(72) Erfinder: **Schmitz, Hans-Werner**
**Grillostrasse 100a**
**D-4650 Gelsenkirchen-Schalke(DE)**

(54) **Autarker und beweglicher und/oder gefesselter archimedischer Auftriebskörper mit weiträumiger Bodenkontaktfreiheit für allgemeine und/oder spezielle Wohn-, Arbeits-, Transport-, Gesundheits- und/oder Sicherheitsbedürfnisse.**

(57) Archimedischer Auftriebskörper mit torusförmigen Aufbau (1) mit einer kombinierten Wohn- und Autarkieplattform (3) welche in atmosphärischem Schwebezustand tellerförmig auf der oberen Hülle und über dem Zentralen Durchlass sitzt.

Die Auftriebskörper, die durch Autarkie, Beweglichkeit Schutz- und Versorgungseinrichtung grösstmögliche Überlebensgarantie bei Kriegs- und bei Naturereinissen bieten dienen auch in Friedenszeiten dem Wohnen und Arbeiten und sonstigen Gesundheits- und Sicherheitsbedürfnissen.

EP 0 088 806 A1

./...

Hans-Werner Schmitz, 4650 GE-Schalke, Grillostraße 100 a
Zeichnung: „B" Maßstab 1 : 25.000

Hans-Werner Schmitz
Grillostraße 100 a
4650 Gelsenk.-Schalke

0088806

Gelsenkirchen, den 30.9.82

Blatt 1

1)Autarker und beweglicher und/oder gefesselter archimedischer Auftriebskörper mit weiträumiger Bodenkontaktfreiheit für allgemeine und/oder spezielle Wohn-, Arbeits-, Transport-, und/oder Sicherheits- und/oder Gesundheitsbedürfnisse.

Die Erfindung betrifft einen archimedischen Auftriebskörper der durch Autarkie, Beweglichkeit, Schutz- und Versorgungseinrichtungen größtmögliche Überlebensgarantien im Kriegs-, Katastrophenfall und bei Naturereignissen bietet sowie auch in Friedenszeiten dem Wohnen und Arbeiten und sonstigen Gesundheits- und Sicherheitsbedürfnissen dient.

Bei derartigen Auftriebskörpern ist eine bestimmte Mindestgröße erforderlich, um einerseits die verschiedenen Autarkie-, aktiven und passiven Schutzeinrichtungen vom freien Auftrieb in einer bestimmten Schwebehöhe zu halten, andererseits ist die Beweglichkeit durch zu große und schwere Auftriebskörper nicht unnötig einzuschränken. Weiterhin ist sicherzustellen, daß auch bei atomaren, biologischen und chemischen Angriffen, Umweltkatastrophen und Naturereignissen die Versorgung mit lebenswichtigen Dingen wie Luft, Wasser, Nahrung und Energie gewährleistet ist. Außerdem ist die Ausrüstung mit Verkehrsmitteln sicherzustellen, welche die Direktkontaktfreiheit des Auftriebskörpers zur Planetenoberfläche und den Transport von Personen und Gütern zwischen den verschiedensten Bezugspunkten gewährleisten.

Es ist bekannt, zur Erfüllung der normalen Lebenserhaltungs-, Arbeits- und Transporterfordernisse Ballone, Luftschiffe, Weltraumfahrzeuge und Weltraumstationen mit den entsprechenden Einrichtungen zu versehen. Für extreme Situationen und Sicherheitsbedürfnisse werden Bunker, Gefängnisse auf Inseln und Gefängnisfestungen errichtet. Für den normalen Bedarf der Bevölkerungsentwicklung, des Wirtschaftswachstums sowie der Lebensqualität werden für den Bedarf des nächsten Jahrhunderts durch NASA - Seminarprojekte i.V.m.

Hans-Werner Schmitz
Grillostraße 100 a
4650 Gelsenk.-Schalke

0088806

Blatt 2

1) der Universität Stanford, Kalifornien, Weltraumkolonien für
10.000 Bewohner konzipiert und durch weitere Studien vertieft (Werner Buedeler "Geschichte der Raumfahrt" erschienen Sigloch Edition, Künzelsau).

5) Die z.Z. vorhandenen Ballone, Luftschiffe, Weltraumfahrzeuge und Weltraumstationen sind nur für kleine Menschengruppen, geringe Verweilzeiten und in den ersten drei
Fällen für den Planetenoberflächenkontakt bestimmt und
sowie keiner Extremsituation gewachsen. Weiterhin entsprechen die eigentlichen Schutzräume und Bunker nur in
geringem Umfang dem Bedarf an Überlebensgarantie in extremen Situationen und werden in keiner Weise der Bevölkerungsdichte gerecht. Krankenhäuser und Sanatorien sind
immer mehr den Umweltgefahren ausgesetzt und den Anforderungen eines modernen Krieges oder möglichen Katastrophen
nicht gewachsen. Die in den Studien der NASA und der Stanford Universität, Kalifornien konzipierten Weltraumkolonien erfordern einen gewaltigen Technologie-, Finanz-,
Energie-, Transport- und Zeitaufwand, so daß erst im zweiten Drittel des nächsten Jahrhunderts mit ihrer Funktion
gerechnet werden kann. Der eigentliche Bedarf von Wohn-,
Arbeits-, Nahrungs-, Energie- und Überlebensqualität und
-quantität läßt sich aber aus den "Grenzen des Wachstums"
Club of Rome sowie aus "Global 2000" der Bericht an den
Präsidenten der USA für den Zeitraum vor der Jahrhundert-
und -tausendwende ersehen. Es klafft also eine gewaltige
Lücke zwischen dem Heute und dem Übermorgen.
Der Erfindung liegt die Aufgabe zugrunde, die Vorteile von
Ballonen, Luftschiffen, Weltraumfahrzeugen und Weltraumstationen einerseits und von Einrichtungen für Katastrophenschutz, Sicherheit, Arbeit, Wohnung, Gesundheit und
überleben unter dem Aspekt, daß für diese Auftriebskörper
während der Betriebszeit kein direkter Kontakt zur Planetenoberfläche nötig ist, um die Bewegungsfreiheit und die
weitgehende Autarkie der jeweiligen Bevölkerung aufrecht

Hans-Werner Schmitz
Grillostraße 100 a
4650 Gelsenk.-Schalke

Gelsenkirchen, den 30.9.82

Blatt 3

..zu erhalten, miteinander zu vereinen. Außerdem soll diese Erfindung eine Entwicklungslücke schließen, die mit den Postulaten von Marx und Engels, worin der Boden als nicht beliebig vermehrbar bezeichnet wurde, begann und sich bis in die NASA-Studien fortsetzt, wo für das Übermorgen gedacht und geplant wird, für das Heute und Morgen jedoch keine wirksame Hilfe geschaffen wird. Durch diese Erfindung soll das Leben und Arbeiten in der dritten Dimension ermöglicht werden, ohne die Masse der Menschheit schon jetzt ins Weltall zu befördern, um die Artenvielfalt der Fauna und Flora zu erhalten und/zu erreichen, daß die Menschheit sich trotzdem die Erde untertan macht.

Diese Aufgabe wird erfindungsmäßig dadurch gelöst, daß der Auftriebskörper ein gutes Volumen-Oberflächen-Verhältnis hat und mit einer oder mehreren Wohnplattformen, welche durch eine oder mehrere Sichtkuppeln geschützt sind, von einem oder mehreren Energiewandlern und/oder -speichern versorgt, durch aktive und/oder passive Abwehreinrichtungen verteidigt werden, mittels hydroponischen und/oder anderen Gärten sowie Wasserdestillatoren, Luftumwälz- und Filteranlagen die Nahrung produzieren bzw. Wasser und Luft aus der Außenatmosphäre heranziehen und reinigen, mit Verkehrsmitteln, Startvorrichtungen und -plätzen, mittels Fäkalien-, Abfallbeseitigungs-, Sauerstoff-, Treibstoff- und Traggaserzeugungsanlagen, Auftriebsenergie, Wärme- und Fortbewegungsenergie erzeugt sowie mit Steuerungs-, Sichtungs-, Verständigungs- und Weiterbewegungsmechanismen ausgerüstet sind.

Um solch einen Auftriebskörper, der jeweils als Ballon (gefesselt, frei) und/oder Luftschiff und/oder Weltraumfahrzeug und/oder Weltraumstation und/oder ~~Weltraumfahrzeug~~ Fremdatmosphärenforschungs- und/oder -siedlungsschiff mit den jeweils nötigen Werkstoffen ausgeführt wird, eine große Stabilität und ein gutes Volumen-Oberflächen-Verhältnis zu verleihen, wird nach einer weiteren Ausbildung der Erfin-

Hans-Werner Schmitz
Grillostraße 100 a
4650 Gelsenk.-Schalke ·

Gelsenkirchen, den 30.9.82

Blatt 4

..dung als Torus mit entsprechendem "R" zu "r" – Verhältnis hergestellt, welcher mit einer kombinierten Wohn- und Autarkieplattform versehen ist, die im atmospärischen Schwebezustand tellerförmig auf der oberen Hülle und über dem zentralen Durchlaß sitzt, während die Sichtkuppel in selbsttragender Bauweise und/oder durch einen Gittermast, welcher von verstärkten Plattformteilen und/oder daran befestigten Seilen im Plattzentrum fixiert, den Atmosphäreninnendruck sowie die am äußeren Plattformrand befindlichen Bauwerke hoch- und festgehalten wird.

Die mit der Erfindung erzielten Vorteile sind:

1. Nutzung des Luftraumes bis zu einer bestimmten Höhe über der gesamten Planetenoberfläche, als Wohn- und/oder Überlebensraum.

2. Verfielfachung des menschlichen Lebensraumes und dadurch Vermehrung des tierischen und pflanzlichen Lebensraumes auf der Erde.

3. Zersiedlungsstopp und Verlangsamung der Umweltzerstörung.

4. Renaturierung nach ca. 20 Jahren in schrittweiser Folge bis auf notwendige Reste.

5. Beeinflussung und Regelung des Wettergeschehens bei entsprechender Anzahl von Körpern über einem Gebiet.

6. Steigerung der Nutzungsmöglichkeiten von Sonnen-, Wind- und anderen Energien.

7. Verringerung von karzinogenen und anderen Krankheiten, welche auf die Vergiftung der Umwelt zurückzuführen sind.

8. Schutz vor Schädigung und Vernichtung bei biologischen und/oder chemischen Angriffen.

9. Verhinderung der totalen Vernichtung z.B. der Bundesbürger mittels atomarer Angriffe, durch Ausschalten der Falloutwirkung.

10. Verringerung der Erfolgswahrscheinlichkeit von atomaren Einzelschlägen, durch Wahl geeigneter Schwebehöhen und Ausweichen auf andere Positionen.

11. Erhöhung der Möglichkeiten zur gänzlichen Neuplanung und

Hans-Werner Schmitz
Grillostraße 100 a
4650 Gelsenk.-Schalke

Gelsenkirchen, den 30.9.82

Blatt 5

1) Erschließung z.B. des Bundesgebietes unter ökologischen, verteidigungs-, wirtschafts-, verkehrs- und technologiepolitischen Aspekten, da die Körper eng aneinandergebunden sowie ortsfest und gleichzeitg beweglich ausgerüstet werden können, wobei die Verbindungen schnell lösbar sein müssen.

12.Schaffung von beweglichen und autarken Krankenhäusern, Rettungs- und Forschungsstationen mit zunächst ortsfestem Charakter.

13.Möglichkeit zur schrittweisen Erweiterung zum Weltraumfahrzeug insbesondere unter Nutzung von supraleitenden Magneten, planetaren und solaren Magnetfeldern und Elektronen und Ionen, welche mit der Massenherstellung von hochwertigen insbesondere keramischen Werkstoffen einhergehen kann.

14.Möglichkeit zur schrittweisen Erweiterung zum Fremdatmosphärenforschungs- und siedlungsschiff sowie zur Weltraumstation und zu Weltraumgenerationenfahrzeugen.

15.Entscheidende Möglichkeit zur Weiterentwicklung und einer anzustrebenden Homogenisierung ~~darxk~~ Rder Menschheit, da bei einer entsprechenden politischen schrittweisen Weiterentwicklung ohne Staatsgrenzen bei 4.300 Menschen pro qkm auf einer Schalenoberfläche in der Erdatmosphäre, die gesamte Menschheit von heute 4,3 Milliarden über den Staatsgebieten der nördlichen EG-Länder konzentriert werden könnte. Weiterhin würde die Menschheit erst bei einer Anzahl von 1 Billionen gezwungen sein andere Planetenatmosphären und den Weltraum zu besiedeln, wodurch wiederum eine Neubildung von Rassen stattfindet.

16. Möglichkeit zur vollständigen Nutzung der Sonne mittels einer aus solchen Körpern im Sonnenhalo gebildeten Kugelschale, welche auch die Sonnenpole überdeckt und in etwa 22,2 Lichtminuten bzw. ca. 400 Millionen km Entfernung zur Sonne, unter Berücksichtigung der Reflektion und des Hitzestaues und der dadurch evtl. hervorzurufenden Hitze-

Hans-Werner Schmitz
Grillostraße 100 a
4650 Gelsenk.-Schalke

Gelsenkirchen,den 30.9.82

Blatt 6

1) ..todmöglichkeit der inneren Planeten, aufzubauen ist,wobei der Errichtungszeitpunkt solch einer zusammenhängenden kugelschaligen Weltraumstation entscheidend vom weiteren Bevölkerungsdruck abhängen wird.

5) 17. *Nutzung* der von Menschen großenteils geräumten Erde als Naturerlebnisparadies mit einzelnen notwendigen Forschungs- und Bergwerksstationen, wobei der Exodus der Menschheit mit der schrittweisen Verlagerung der Industrieproduktion in den Weltraum , insbesondere in den Erd- und Mond- später in den Sonnenhalo erfolgt, wobei es sich anbietet zum Transport ebenfalls solche Körper und/oder solche torodialen Auftriebskörper als Startbase für Raumtransportfahrzeuge zu benutzen (siehe P 28 14 309.1-22). Die Energieversorgung von Bergwerks- und Forschungsstationen kann durch P 28 57 421.2 erfolgen.

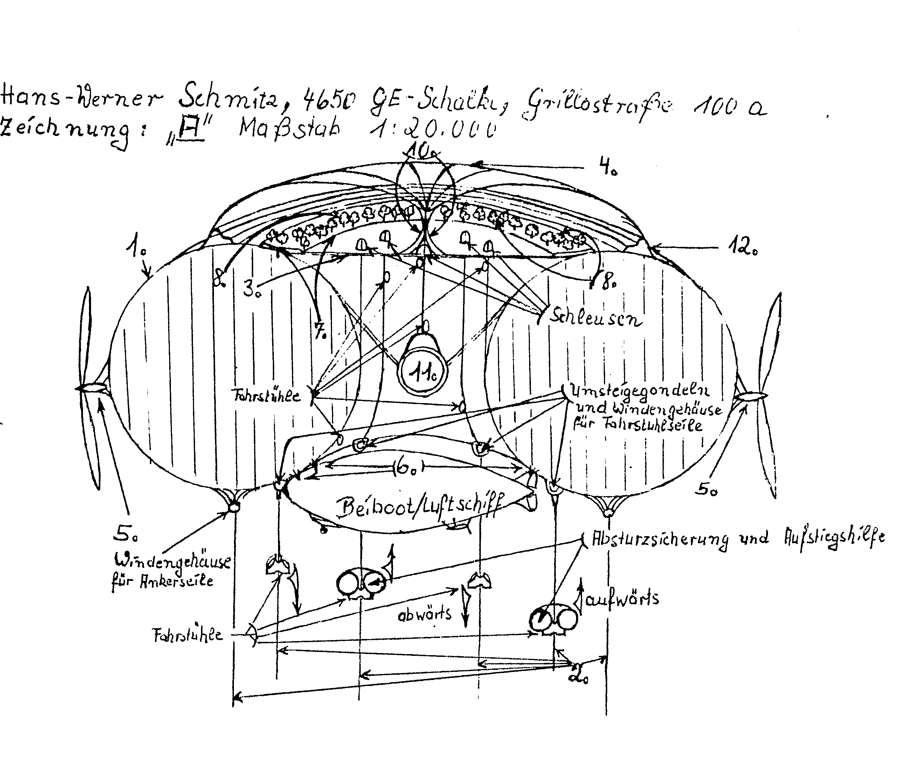

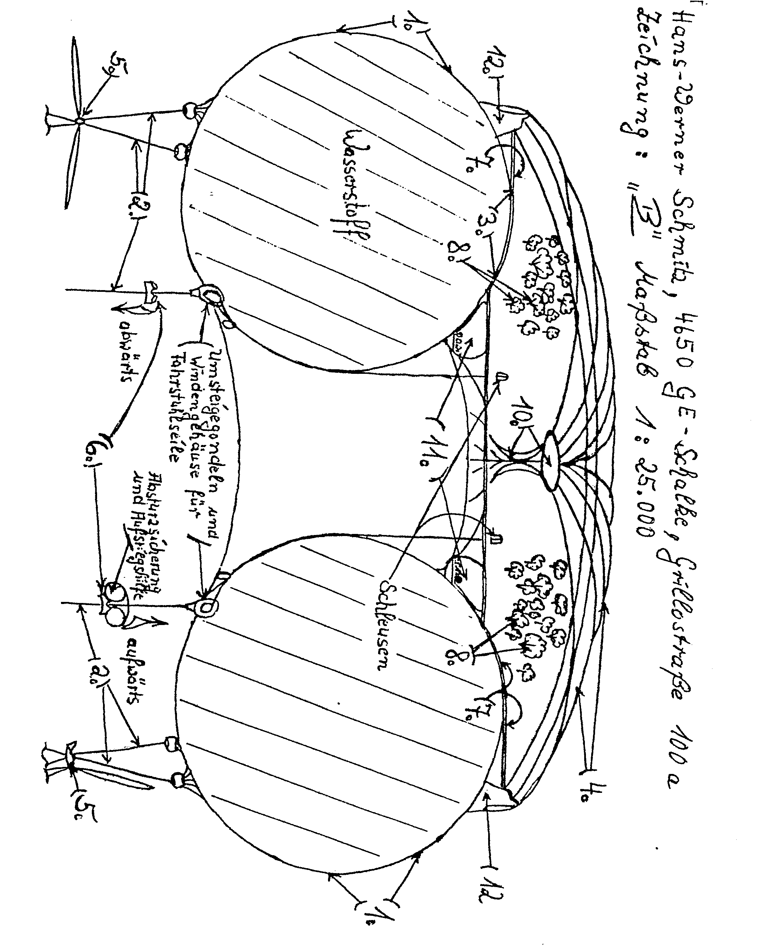

Ein Ausführungsbeispiel der Erfindung ist in der Zeichnung "A", ein zweites Ausführungsbeispiel ist in der Zeichnung "B" dargestellt.

Es zeigen: "A" einen torodialen Auftriebskörper mit den Maßen "r" 60 Meter und "R" 90 Meter, welcher als kombiniertes Fesselballon-Luftschiff ausgeführt und mit zwei Luftschiffbeibooten von ca. 120 Metern Länge und 40 Metern Ø zusätzlich ausgerüstet ist. Es soll zur Erforschung der magnetischen Pole, der Polargebiete sowie zur Erholung und autarken Versorgung von Expeditions- und Stationsmannschaften dienen, insbesondere soll hiermit die Möglichkeit von elektromagnetischen Weltraumstarts an den Magnetpolen untersucht und erprobt werden. "B" zeigt einen torodialen Auftriebskörper mit den Maßen "r" 100 Meter und "R" 150 Meter, welcher als Fesselballon mit Luftschiffnotfunktionen ausgeführt ist und mittels GROWI - Anlagen mit Elektrizität versorgt wird, wobei diese mittels gespeicherter Elektrizität in Notfällen für die Fortbewegung bestimmt sind. Er soll ca. 1.000 Menschen als sicherer und autarker Wohnort dienen und im Verband zu mindestens sieben Einheiten eingesetzt

Hans-Werner Schmitz                    Gelsenkirchen, den 30.9.82

Grillostraße 100 a

4650 Gelsenk.-Schalke

Blatt 7

1) ..werden.

   Zu Zeichnung "A":

   1. Auftriebskörperhülle. torodial $\pi r^2$ 60 m, "R" 90 m, Oberfläche = 213.183,46 qm, Volumen = 6.395.503,7 m$^3$, Wand-
      stärke = 0,003 m, bestehend aus 41,856 Gewichts% Stahl zu
      7,848 g cm$^3$, 58,144 Gewichts% Kunstkautschuk und Teflon
      durchschnittlich 0,948 g pro cm$^3$, Gesamtdurchschnitt = 1,5
      g pro cm$^3$, also Hüllengewicht   =                   959,326 t

   2. Anker- und Fahrstuhlseile je 3.300 Meter lang,
      je 6 Ankerseile, bestehend aus je 200 Stük. 4000
      m langen und 4 mm starken Stahlseilen zu 7,8 g
      cm$^3$, welche mit 50 Stck. 4.000 m langen und 4
      mm starken AluTiMg-Seilen verdrillt sind und am
      unteren Ende eine Öse bilden, Gewicht bei 4,3 g
      cm$^3$ der AluTiMg-Legierung, Gesamtgewicht   =        535,332 t

      6 Fahrstuhlseile bestehend aus je 60 Stck. 4000
      m langen, 4 mm starken Stahlseilen zu 7,8 g pro
      cm$^3$, welche mit je 20 Stck. 4.000 m langen, 4 mm
      starken Seilen aus AluTiMg-Legierung von 4,3 g
      pro cm$^3$ verdrillt sind und am unteren Ende eine
      Öse bilden, Gesamtgewicht            =               167,011 t

   3. Teller über dem zentralen Durchlaß, Ø 140 m
      3 mm stark, Material ebenso wie Auftriebskörperhülle 1,5 g pro cm$^3$ und mit dieser verschweißt
      Gewicht                              =                69,273 t

   4. Sichtkuppel aus säurefestem und UV-beständigem
      Stratofilm Ø 240 m, Stärke 0,4 mm, Gewicht bei
      1 g pro cm$^3$                       =                18,096 t

   5. Der Antrieb erfolgt über je 5 Zug- und Druck-
      propeller, welche gleichzeitig die Steuerungs-
      aufgaben ausführen. Die Bewegung der Zweiblatt-
      propeller wird durch supraleitende Magnete herv
      vorgerufen, welche gleichzeitig die Aufgabe von
      Elektrizitätsspeichern übernehmen. Bei Fesse-
      lung des Auftriebskörpers übernehmen die Pro-

0088806

Hans-Werner Schmitz
Grillostraße 100 a
4650 Gelsenk.-Schalke

Gelsenkirchen, den 30.9.82

Blatt 8

1) ..peller die Elektrizitätserzeugung mittels Windenergie.
Der Rotordurchmesser soll 100 m das Gesamt- =   <u>260,000 t</u>
wicht betragen.

<u>6.</u>Halterungen für zwei Luftschiffe 120 m lang
40 m Ø à 12 Stck. zu je 2,5 t, Gesamtgewicht=   <u>60,000 t</u>

<u>7.</u> Hydroponischer Garten, bestehend aus einer
5 cm hohen Schicht aus porösen Hydrokügelchen,
Zwischenräume mit Wasservorrat gefüllt, kreisringförmig aufgebaut, äußerer Ø 160 m, innerer
Ø 140 m, bei 1,2 g pro cm$^3$ , Gesamtgewicht   =   <u>527,788 t</u>

<u>8.</u>Organisches Material zur Erntezeit bei
8.796,4594 m$^2$ Anbaufläche und ca. 35 kg pro m$^2$=   <u>307876  t</u>

<u>9.</u>Besatzung 200 Menschen à 100 kg   =   <u>20,000 t</u>

<u>10.</u>Zentraler Mast 40 m hoch für Sichtkuppel,
Halteseile und -streben für im zentralen Durchlaß aufgehängtem Reaktor, Gesamtgewicht ca. =   <u>450,000 t</u>

<u>11.</u>Brutreaktor mit kombinierter Natriumküh-
lung/Quecksilberdampf-Elektrizitätsgewinnung
über elektromagnetische Düsen für 150 bis 300
MWe-Leistung,einschließlich Abschirmung, Gesamtgewicht ca.   =   <u>1.200,000 t</u>

<u>12.</u>Gebäude ebenso wie Auftriebskörperhülle aus
Kunstkautschuk, Teflon und feinem Stahldrahtgeflecht, Forschungsgeräte, Fahrstühle auch mit
Balloncharakter und mit elektromagnetischem Antrieb für den Verkehr im gefesselten Zustand
mit dem Ankerplatz, Steuerungs-,Orientierungs-
und Rechengeräte sonstige Einrichtungen, Gewicht
zusammen   =   <u>300,000 t</u>

<u>13.</u>Traggasgewicht für eine Schwebehöhe  von
3.300 m unter Abzug von 2 % für das Abweichen
von der idealen Form  -bei Wasserstoff-  =   <u>338,461 t</u>

<u>14.</u>Hüllenfeuchtigkeitsballast   =   <u>40,000 t</u>

Gesamtgewicht des kombinierten Fesselballon-
Luftschiffes =   <u>5.253,163 t</u>

Hans-Werner Schmitz
Grillostraße 100 a
4650 Gelsenk.-Schalke

0088806

Gelsenkirchen, den 30.9.82

Blatt 9

1) ohne zwei Luftschiffbeiboote

Die gesamte Luftverdrängung bei 3.300 m Schwebehöhe bei Abzug von 2 % für das Abweichen von der idealen Form = 5.390,131 t

5) Es verbleibt eine konstruktive Reserve von = 136,968 t Die zwei Luftschiffbeiboote sollten in die Lage versetzt werden , mittels des freien Auftriebs und ihrer Motoren diese Höhe selbständig zu erreichen, ist dies aus Gewichts- und/oder Kostengründen nicht tunlich, so sollte das kombinierte Fesselballon-Luftschiff mit einer Gaswerflüssigungsanlage ausgerüstet sein. Ein Teil des Gewichts beider Luftschiffbeiboote müßte dann über die konstruktive Reserve aufgebracht werden. Ein zusätzlicher Einbau mehrerer Luft- und Traggassäcke wäre der Sicherheit dienlich und gewichtsmäßig möglich.

Zu Zeichnung "B":

1. Auftriebskörperhülle torodial "r" 100 m, "R" 150 m, Oberfläche = 592.176,26 $m^2$, Volumen = 29.608.813 $m^3$, Wandstärke 0,003 m bestehend aus 41,856 Gewichts% Stahldrahtgewebe 7,848 g $cm^3$, 58,144 Gewichts% Kunstkautschuk und Teflon durchschnittlich 0,948 g $cm^3$, Gesamtdurchschnitt 1,5 g pro $cm^3$, Hüllengewicht = 2.664,794 t

2. Anker- und Fahrstuhlseile je 3.300 m lang, 20 Ankerseile bestehend aus je 260 Stck.

4.100 m langen und 4 mm starken Stahlseilen 7,8 g $cm^3$, welche mit je 65 Stck. 4.100 m langen, 4 mm starken Seilen aus AluTiMg-Legierung 4,3 g $cm^3$ bestehend, verdrillt sind und am unteren Ende eine Öse bilden, Gesamtgewicht =

2.377,760 t

20 Fahrstuhlseile aus je 70 Stck. 4.100 m langen Stahlseilen 7,8 g $cm^3$ und je 30 Stck. 4.100 m langen, 4 mm starken Seilen aus AluTiMg-Legierung 4,3 g $cm^3$ bestehend, welche miteinander verdrillt sind und am unteren Ende eine

Hans-Werner Schmitz
Grillostraße 100 a
4650 Gelsenk.-Schalke

Gelsenkirchen, den 30.9.82

Blatt 10

..Öse bilden, Gesamtgewicht = <u>695,556 t</u>

3. Teller über dem zentralen Durchlaß, Ø/200 m, 3 mm stark, Material ebenso wie Auftriebskörperhülle 1,5 g cm$^3$ und mit dieser veschweißt = <u>141,372 t</u>

4. Sichtkuppel aus säurefestem und Uv-beständigem Stratofilm Ø 440 m, Stärke 0,4 mm, Gewicht bei 1 g cm$^3$ = <u>60,822 t</u>

5. Elektrizitätserzeugung durch 10 GROWI-Anlagen, Rotorendurchmesser 100 m durchschnittliche Elektrizitätserzeugung à 3 MWe, ca. 100 m unter der tiefsten Stelle der Auftriebskörperhülle an je zwei Ankerseilen aufgehängt und um diese schwenkbar gelagert. Durch die Bewegung der Zweiblattpropeller wird innerhalb supraleitender Magnete Elektrizität erzeugt und in diesen bis zum Bedarfsfall gespeichert, Gesamtgewicht = <u>260,000 t</u>

6. 20 Fahrstühle mit elektromagnetischem Antrieb und Absturzsicherung mittels torodialem Ballon "r" 5 m, "R" 6 m, Nutzlastauftriebskraft in 1.000 m Höhe 1,5 t, mit flüssigem Wasserstoff als Traggasvorrat, Gesamtgewicht aller zGG = <u>76,390 t</u>

gesamte Nutzlastauftriebskrft am Erdboden = <u>-33,333 t</u>

<u>43,057 t</u>

zulässige gesamte Beförderungskapazität mit einem Hub 415 Personen à 80kg

7. Hydroponischer Garten, bestehend aus einer zunächst 4,4 cm hohen Schicht aus porösen Hydrokügelchen, Zwischenräume mit Wasservorrat gefüllt, Ø 400 m, 1,2 g pro cm$^3$, Gewicht = <u>6.635,044 t</u>

8. Organisches Material zur Erntezeit bei 125.600 m$^2$ Anbaufläche und ca. 50 kg pro m$^2$ Gewicht = <u>6.280,000 t</u>

9. Einwohner 1.000 Menschen und ihre leicht bewegliche Habe à 150 kg Gewicht = <u>150,- t</u>

Hans-Werner Schmitz                    Gelsenkirchen, den 30.9.82
Grillostraße 100 a
4650 Gelsenk.-Schalke

Blatt 11

10. Zentraler Mast 50 m hoch für Sichtkuppel mit Hubschrauberlandeplatz, Halteseile und -streben für im zentralen
Durchlaß aufgehängte Fäkalien- Abfallbeseitigungs- und
Traggaserzeugungsanlage, Gewicht           =     650,000 t

11. Fäkalien-, Abfallbeseitigungs- und Traggaserzeugungsanlage, bestehend aus dem Traggassammelbehälter und am Boden montierte Suprasilgefäße mit Fäkalien- und Abfallsammelfunktion
und automatischer Zufuhr. Diese werden nacheinander jeweils mit konzentrierten und elektrisch
erzeugten Laserstrahlen möglichst im UV-Bereich
bestrahlt und der Wasserstoff durch die Wärmeentwicklung und den Strahlungsdruck aus seinen
chemischen Verbindungen herausgerissen und durch
die Suprasilwände in den Traggassammelbehälter
getrieben. Gewicht                         =      40,000 t

12. Gebäude wie Auftriebskörperhülle aus Kunstkautschuk, Teflon und feinem Stahldrahtgewebe,
Warmluftfußbodenheizung und Wärmepumpen, zusätzliche Dämmstoffe wie Steinwolle, Polyurethan,
Luftumwälzanlagen, Gasverflüssigungsanlagen
und sonstige Wohn- und Kontrolleinrichtungen,
Trinkwassererzeugungsanlagen. Gewicht    =   2.500.000 t

13. Traggasgewicht für Wasserstoff
bei einer Schwebehöhe von 3.300 m unter Abzug von 3 % für das Abweichen von der idealen
Torusform                                  =   1.550,910 t

14. Hüllenfeuchtigkeitsballast              =     120,000 t Gesamtgewicht des Fesselballons für Siedlungszwecke                               =  24.169.315 t Die gesamte Luftverdrängung beträgt bei
3.300 m Schwebehöhe bei Abzug von 3 % für das
Abweichen von der idealen Torusform       =  24.699,672 t

15. Es verbleibt eine konstruktive Reserve
von                                        =     530,357 t

0088806

Hans-Werner Schmitz                    Gelsenkirchen, den 30.9.82
Grillostraße 100 a
4650 Gelsenk.-Schalke

Blatt 12

1) Im Verbund mit anderen Siedlungseinheiten z.B. in kleinstädtischer Kopplung ergibt sich eine konstruktive Reserve
von z.B. 49facher Größe entsprechend 25.987,493 t.
diese kann für Laserkanonen, konventionelle Luftabwehrraketen und Ortungseinrichtungen oder falls unnötig, bei anschließender großstädtischer und kontinentaler Kopplung
dieser Körper, für in 2.000 bis 3.000 Metern Höhe aufgehängte Schienenwege für elektromagnetische Schwebebahnen,
Schnellbahnen z.B. Transrapid verwendet werden. Die besonderen Vorteile solcher Konstruktionen sind die erheblich verringerte Lärmbelästigung, der geringere Luftwiderstand, Energieverbrauch und kein zusätzlicher Grunderwerb.
Die GROWI - Anlagen müssen insbesondere ab mittelstädtischer
Kopplung in verschiedenen Höhen über 500 Meter fixiert werden, damit sie sich nicht gegenseitig den Wind vom Rotor
nehmen. Die einzelnen Ankerseile werden in ihre einzelnen
Fasern aufgefächert und mit dem Stahlgewebe der Hülle verschweißt, damit nicht an einzelnen Seilen auftretende Kräfte
an einen einzigen Punkt der Hülle weitergegeben werden
und diese aufreißen.

Die konstruktive Reserve kann auch zur Errichtung einer Rotstarteinrichtung mit z.B. 12 Saturn V / I C - Raketenmotoren von je ca. 700 t Schub und ca. 3 Sekunden Betriebsstoffvorrat verwendet werden.

Hans-Werner Schmitz
Grillostraße 100 a
4650 Gelsenk.-Schalke

Gelsenkirchen, den 30.9.82

Blatt 13

1) Patentansprüche

1. Archimedischer Auftriebskörper, gekennzeichnet durch seine Autarkie, seine wahlweise bewegliche und/oder stationäre Funktion sowie seiner Direktkontaktfreiheit zu Planetenoberflächen, ausgestattet für allgemeine und oder spezielle Wohn-, Arbeits-, Transport- und/oder Gesundheits- und/oder Sicherheitsbedürfnisse.

2. Archimedischer Auftriebskörper nach Anspruch 1, gekennzeichnet durch seinen torusförmigen Aufbau mit gutem Volumen-Oberflächen-Verhältnis, ausgestattet mit einer kombinierten Wohn- und Autarkieplattform, welche im atmosphärischen Schwebezustand tellerförmig auf der oberen Hülle und über dem zentralen Durchlaß sitzt.

3. Auftriebskörper nach Anspruch 1. und 2., dadurch gekennzeichnet, daß eine und/oder mehrere Sichtkuppeln und/oder Zelte in selbsttragender Bauweise und/oder durch einen oder mehrere Masten und/oder den Atmosphäreninnendruck und/oder die am äußeren Plattformrand befindlichen Bauwerke hoch- und festgehalten wird.

4. Auftriebskörper nach Anspruch 1.,2.,3., dadurch gekennzeichnet, daß er jeweils mit den benötigten Werkstoffen, insbesondere für irdische Zwecke ähnlich einem Stahlgürtelautoreifen mit durchgehendem Metall- und/oder Keramikgewebe aufgebaut und im Kopplungsfalle mit Alu-Dampf an den Lichtdurchlaßstellen verspiegelt ist, während für Raumfahrtzwecke vollständig aus Keramik z.B. $SiO_2$, $Al_2O_3$, Diamant bestehende Hüllen, mit z.B. Golddampfverspiegelungen verwendet werden.

5. Auftriebskörper nach Anspruch 1. bis 4., dadurch gekennzeichnet, daß GROWI - Anlagen zur Elektrizitätserzeugung aus Windenergie vorgesehen sind, wobei in der ersten Ausbaustufe der Auftriebskörper überwiegend dem Aufrichten und Fixieren der GROWI - Anlagen dient.

6. Auftriebskörper nach Anspruch 1. bis 5., dadurch gekennzeichnet, daß kerntechnische Anlagen und/ oder Solaranlagen

0088806

Hans-Werner Schmitz
Grillostraße 100 a
4650 Gelsenk.-Schalke

Gelsenkirchen, den 30.9.82

Blatt 14

1) Fortsetzung der Patentansprüche:

zu 6. .. zur Energieerzeugung vorgesehen sind.

7.Auftriebskörper nach Anspruch 1. bis 6., dadurch gekennzeichnet, daß Influenz- Anlagen vorgesehen sind, welche z.

5) B. mittels aufsteigender erwärmter Luft sowie bei Abkühlung
gebildetem Wasserdampf und durch Windbewegungen zerrissene Wassertröpfchen und dadurch entstehende negative und
positive Teilchen arbeiten und die Entstehung von Blitzen
verhindern sowie dadurch hohe Spannungen erzeugen.

Hans-Werner Schmitz, 4650 GE-Schalke, Grillostraße 100 a

Zeichnung: „A" Maßstab 1:20.000

10₀  4₀

1₀  12₀

3₀  8₀

Schleusen

7₀

11₀

Fahrstühle

Umsteigegondeln
und Windengehäuse
für Fahrstuhlseile

6₀

Beiboot/Luftschiff

5₀

5₀  Absturzsicherung und Aufstiegshilfe

Windengehäuse
für Ankerseile

aufwärts

Fahrstühle

abwärts

2₀

-1/2-

Hans-Werner Schmitz, 4650 GE-Schalke, Grillostraße 100 a

Zeichnung: "B" Maßstab 1: 25.000

Wasserstoff

Schleusen

Umsteigegondeln und Windmengkäuse für Fahrstuhlseite

Absturzsicherung und Aufstiegshilfe

abwärts

aufwärts

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 64 B 1/40 |
| X | FRED. COPPERSMITH: "Patent applied for a century of fantastic inventions", Co-ordination (Press & Publicity) Ltd. * Seiten 74,75,77 * | 1 | |
| | --- | | |
| X | BE-A- 827 504 (WALTER) * Seite 1 * | 1 | |
| | --- | | |
| A | MISSILES AND ROCKETS, Band 11, Nr. 7, 13. August 1962, Seite 24, M. GETLER: "Goodyear shows new inflatable station" | 2 | |
| | --- | | |
| A | GB-A-1 203 166 (PEDRICK) | | RECHERCHIERTE SACHGEBIETE (Int. Cl. ³) |
| | ----- | | B 64 B |
| | | | B 64 G |

Der vorliegende Recherchenbericht wurde für alle Patentansprüche erstellt.

| Recherchenort DEN HAAG | Abschlußdatum der Recherche 01-11-1982 | Prüfer HAUGLUSTAINE H.P.M. |
|---|---|---|